(19) **Europäisches Patentamt**
**European Patent Office**
**Office européen des brevets**

(11) **EP 4 625 256 A1**

(12) **EUROPEAN PATENT APPLICATION**

(43) Date of publication:
**01.10.2025 Bulletin 2025/40**

(21) Application number: **25156063.7**

(22) Date of filing: **05.02.2025**

(51) International Patent Classification (IPC):
**G06N 3/0455** (2023.01)   **G06V 10/74** (2022.01)
**G06V 10/774** (2022.01)   **G06N 3/09** (2023.01)
**G06N 3/0895** (2023.01)

(52) Cooperative Patent Classification (CPC):
**G06N 3/0455; G06N 3/09; G06V 10/761;
G06V 10/764; G06V 10/774; G06N 3/0895**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.03.2024 JP 2024051993**

(71) Applicant: **NEC Corporation
108-8001 Tokyo (JP)**

(72) Inventor: **OMI, Yasuo
Tokyo, 108-8001 (JP)**

(74) Representative: **Betten & Resch
Patent- und Rechtsanwälte PartGmbB
Maximiliansplatz 14
80333 München (DE)**

(54) **TRAINING APPARATUS, TRAINING METHOD, AND TRAINING PROGRAM**

(57)    This training apparatus selects, based on a label assigned to an image of interest included in a plurality of images and a label assigned to each of the plurality of images, each of the plurality of images as a positive sample, a hard negative sample, or an easy negative sample; reselects each of the plurality of images having been selected, as the positive sample, the hard negative sample, or the easy negative sample; and uses the plurality of images each having been reselected by the reselecting section to train a machine learning model. Results of classification performed via the machine learning model assist the decision making in diagnosis made by a doctor or the like.

FIG. 1

EP 4 625 256 A1

**Description**

CROSS REFERENCE TO RELATED APPLICATIONS

This application is based upon and claims the benefit of priority from Japanese Patent Application No. 2024-051993 filed on March 27, 2024, the disclosure of which is incorporated herein in its entirety by reference.

Technical Field

The present disclosure relates to a training apparatus, a training method, and a training program.

Background Art

Techniques for training a machine learning model by contrastive Learning are known. In contrastive learning, a machine learning model is trained such that the inner product of the feature vector of a set of anchors, which are images of interest, and the feature vector of a set of positive samples increases and the inner product of the feature vector of the set of anchors and the feature vector of a set of negative samples decreases. Patent Literature 1 discloses an approach for generating a machine learning model by the sample framework for contrastive learning of visual representations (SimCLR), which is an example of the contrastive Learning.

Citation List

[Patent Literature]

[Patent Literature 1]
Japanese Patent Application Publication Tokukai No. 2022-178892

Summary of Invention

Technical Problem

In contrastive learning, the similarity between the features of an anchor and the features of a negative sample can differ from negative sample to negative sample. There is a negative sample which has a certain degree of commonality with an anchor, and in some cases, even a negative sample which has little commonality with an anchor is included. If a plurality of samples having different degrees of similarity to an anchor are uniformly defined as negative samples, and contrastive learning is then carried out, it is impossible to make machine learning properly proceed and can therefore be impossible to increase the inference accuracy of a machine learning model.

The present disclosure has been made in view of the above problem, and an example object thereof is to provide a technique for training a machine learning model which has high inference accuracy.

Solution to Problem

A training apparatus in accordance with an example aspect of the present disclosure includes: a selecting means for selecting, based on a label assigned to an image of interest included in a plurality of images and a label assigned to each of the plurality of images, each of the plurality of images as a positive sample, a hard negative sample, or an easy negative sample; a reselecting means for reselecting, based on at least one of similarities which are a similarity between features of the image of interest and features of the hard negative sample and a similarity between the features of the image of interest and features of the easy negative sample, each of the plurality of images having been selected by the selecting means, as the positive sample, the hard negative sample, or the easy negative sample; and a training means for using the plurality of images each having been reselected by the reselecting means to train a machine learning model to (i) increase a similarity between the features of the image of interest and features of the positive sample, (ii) decrease the similarity between the features of the image of interest and the features of the hard negative sample and the similarity between the features of the image of interest and the features of the easy negative sample, and (iii) make the similarity between the features of the image of interest and the features of the hard negative sample greater than the similarity between the features of the image of interest and the features of the easy negative sample.

A training method in accordance with an example aspect of the present disclosure includes: at least one processor selecting, based on a label assigned to an image of interest included in a plurality of images and a label assigned to each of the plurality of images, each of the plurality of images as a positive sample, a hard negative sample, or an easy negative sample; the at least one processor reselecting, based on at least one of similarities which are a similarity between features of the image of interest and features of the hard negative sample and a similarity between the features of the image of interest and features of the easy negative sample, each of the plurality of images having been selected by the selecting, as the positive sample, the hard negative sample, or the easy negative sample; and the at least one processor using the plurality of images each having been reselected by the reselecting to train a machine learning model to (i) increase a similarity between the features of the image of interest and features of the positive sample, (ii) decrease the similarity between the features of the image of interest and the features of the hard negative sample and the similarity between the features of the image of interest and the features of the easy negative sample, and (iii) make the similarity between the features of the image of interest and the features of the hard negative sample greater than the similarity between the features of the image of interest and the features of the easy negative sample.

A training program in accordance with an example aspect of the present disclosure is a program for causing a computer to function as a training apparatus, and the program causes the computer to function as: a selecting means for selecting, based on a label assigned to an image of interest included in a plurality of images and a label assigned to each of the plurality of images, each of the plurality of images as a positive sample, a hard negative sample, or an easy negative sample; a reselecting means for reselecting, based on at least one of similarities which are a similarity between features of the image of interest and features of the hard negative sample and a similarity between the features of the image of interest and features of the easy negative sample, each of the plurality of images having been selected by the selecting means, as the positive sample, the hard negative sample, or the easy negative sample; and a training means for using the plurality of images each having been reselected by the reselecting means to train a machine learning model to (i) increase a similarity between the features of the image of interest and features of the positive sample, (ii) decrease the similarity between the features of the image of interest and the features of the hard negative sample and the similarity between the features of the image of interest and the features of the easy negative sample, and (iii) make the similarity between the features of the image of interest and the features of the hard negative sample greater than the similarity between the features of the image of interest and the features of the easy negative sample.

Advantageous Effects of Invention

An example aspect of the present disclosure provides an example advantage of making it possible to provide a technique for training a machine learning model which has high inference accuracy.

Brief Description of Drawings

Fig. 1 is a block diagram illustrating a configuration of a training apparatus in accordance with the present disclosure.
Fig. 2 is a flowchart illustrating a flow of a training method in accordance with the present disclosure.
Fig. 3 is a block diagram illustrating a configuration of an information processing apparatus in accordance with the present disclosure.
Fig. 4 is a diagram illustrating an example of classes and subclasses in accordance with the present disclosure.
Fig. 5 is a diagram illustrating an example of classes, middle classes, and subclasses in accordance with the present disclosure.
Fig. 6 is a block diagram illustrating a configuration of a machine learning model in accordance with the present disclosure.
Fig. 7 is a representation of a specific example of a reselecting process in accordance with the present disclosure.
Fig. 8 is a block diagram illustrating a configuration of a computer which functions as the training apparatus and the information processing apparatus in accordance with the present disclosure.
Fig. 9 is a representation of a specific example of a training process of the conventional art.

Example Embodiments

The following description will discuss example embodiments of the present invention. However, the present invention is not limited to the example embodiments described below, but can be altered by a skilled person in the art within the scope of the claims. For example, any embodiment derived by appropriately combining techniques (some or all of products or methods) adopted in differing example embodiments described below can be within the scope of the present invention. Further, any embodiment derived by appropriately omitting one or more of the techniques adopted in differing example embodiments described below can be within the scope of the present invention. Furthermore, the advantage mentioned in each of the example embodiments described below is an example advantage expected in that example embodiment, and does not define the extension of the present invention. That is, any embodiment which does not provide the example advantages mentioned in the example embodiments described below can also be within the scope of the present invention.

[First example embodiment]

The following description will discuss a first example embodiment, which is an example embodiment of the present invention, in detail with reference to the drawings. The present example embodiment is basic to each of the example embodiments which will be described later. It should be noted that the applicability of each of the techniques adopted in the present example embodiment is not limited to the present example embodiment. That is, each technique adopted in the present example embodiment can be adopted in another example embodiment included in the present disclosure, to the extent of constituting no specific technical obstacle. Further, each technique illustrated in the drawings referred to for the description of the present example embodiment can be adopted in another example embodiment included in the present disclosure, to the extent of constituting no specific technical obstacle.

(Configuration of training apparatus)

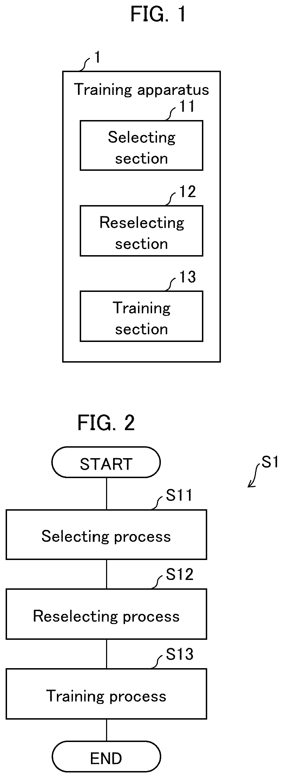

The configuration of a training apparatus 1 is described here with reference to Fig. 1. Fig. 1 is a block diagram illustrating the configuration of the training apparatus 1. The training apparatus 1 includes a selecting section 11, a reselecting section 12, and a training section 13, as illustrated in Fig. 1.

The selecting section 11 selects, based on a label assigned to an image of interest included in a plurality of images and a label assigned to each of the plurality of images, each of the plurality of images as a positive sample, a hard negative sample, or an easy negative sample. The reselecting section 12 reselects, based on at least one of similarities which are a similarity between features of the image of interest and features of the hard negative sample and a similarity between the features of the image of interest and features of the easy negative sample, each of the plurality of images having been selected by the selecting section 11, as the positive sample, the hard negative sample, or the easy negative sample. The training section 13 uses the plurality of images each having been reselected by the reselecting section 12 to train a machine learning model to (i) increase a similarity between the features of the image of interest and features of the positive sample, (ii) decrease the similarity between the features of the image of interest and the features of the hard negative sample and the similarity between the features of the image of interest and the features of the easy negative sample, and (iii) make the similarity between the features of the image of interest and the features of the hard negative sample greater than the similarity between the features of the image of interest and the features of the easy negative sample.

(Example advantage of training apparatus)

As above, the training apparatus 1 includes: a selecting section 11 for selecting, based on a label assigned to an image of interest included in a plurality of images and a label assigned to each of the plurality of images, each of the plurality of images as a positive sample, a hard negative sample, or an easy negative sample; a reselecting section 12 for reselecting, based on at least one of similarities which are a similarity between features of the image of interest and features of the hard negative sample and a similarity between the features of the image of interest and features of the easy negative sample, each of the plurality of images having been selected by the selecting section 11, as the positive sample, the hard negative sample, or the easy negative sample; and a training section 13 for using the plurality of images each having been reselected by the reselecting section 12 to train a machine learning model to (i) increase a similarity between the features of the image of interest and features of the positive sample, (ii) decrease the similarity between the features of the image of interest and the features of the hard negative sample and the similarity between the features of the image of interest and the features of the easy negative sample, and (iii) make the similarity between the features of the image of interest and the features of the hard negative sample greater than the similarity between the features of the image of interest and the features of the easy negative sample. Thus, the training apparatus 1 provides an example advantage of making it possible to train a machine learning model which has high inference accuracy.

(Flow of training method)

The flow of a training method S1 is described here with reference to Fig. 2. Fig. 2 is a flowchart illustrating the flow of the training method S1. The training method S1 includes a selecting process S11, a reselecting process S12, and a training process S13, as illustrated in Fig. 2.

In the selecting process S11, at least one processor selects, based on a label assigned to an image of interest included in a plurality of images and a label assigned to each of the plurality of images, each of the plurality of images as a positive sample, a hard negative sample, or an easy negative sample. In the reselecting process S12, the at least one processor reselects, based on at least one of similarities which are a similarity between features of the image of interest and features of the hard negative sample and a similarity between the features of the image of interest and features of the easy negative sample, each of the plurality of images having been selected by the selecting process S11, as the positive sample, the hard negative sample, or the easy negative sample. In the training process S13, the at least one processor uses the plurality of images each having been reselected by the reselecting process S12 to train a machine learning model to (i) increase a similarity between the features of the image of interest and features of the positive sample, (ii) decrease the similarity between the features of the image of interest and the features of the hard negative sample and the similarity between the features of the image of interest and the features of the easy negative sample, and (iii) make the similarity between the features of the image of interest and the features of the hard negative sample greater than the similarity between the features of the image of interest and the features of the easy negative sample.

(Example advantage of training method)

As above, the training method S1 include: a selecting process S11 of at least one processor selecting, based on a label assigned to an image of interest included in a plurality of images and a label assigned to each of the plurality of images, each of the plurality of images as a positive sample, a hard negative sample, or an easy negative sample; a reselecting process S12 of the at least one processor reselecting, based on at least one of similarities which are a similarity between features of the image of interest and features of the hard negative sample and a similarity between the features of the image of interest and features of the easy negative sample, each of the plurality of images having been selected by the selecting process S11, as the positive sample, the hard negative sample, or the easy negative sample; and a training process S13 of the at least one processor using the plurality of images each having been reselected by the reselecting process S12 to train a machine learning model to (i) increase a similarity between the features of the image of interest and features of the positive sample, (ii) decrease the similarity between the features of the image of interest and the features of the hard negative sample and the similarity between the features of the image of interest and the features of the easy negative sample, and (iii) make the similarity between the features of the image of interest and the features of the hard negative sample greater than the similarity between the features of the image of interest and the features of the easy negative sample. Thus, the training method S1 provides an example advantage of making it possible to train a machine learning model which has high inference accuracy.

[Second example embodiment]

The following description will discuss a second example embodiment, which is an example embodiment of the present invention, in detail with reference to the drawings. A component having the same function as a component described in the above example embodiment is assigned the same reference sign, and the description thereof is omitted where appropriate. It should be noted that the applicability of each of the techniques adopted in the present example embodiment is not limited to the present example embodiment. That is, each technique adopted in the present example embodiment can be adopted in another example embodiment included in the present disclosure, to the extent of constituting no specific technical obstacle. Further, each technique illustrated in the drawings referred to for the description of the present example embodiment can be adopted in another example embodiment included in the present disclosure, to the extent of constituting no specific technical obstacle.

<1. Configuration of information processing apparatus 1A>

An information processing apparatus 1A in accordance with the present disclosure is a training apparatus for training a machine learning model which is for carrying out an image recognition task. Further, the information processing apparatus 1A uses a machine learning model generated by machine learning, to carry out an image recognition task. Examples of the image recognition task include a classification task of determining which of predefined classes an object contained as a subject in an image belongs to. As an example, the object contained as the subject in the image is a cell specimen. In this case, in the classification task, an image to be recognized is classified, for example, as one of classes according to whether the cell specimen is benign or malignant and as one of subclasses according to the type of cell specimen. The information processing apparatus 1A can be used for, for example, cytological diagnosis in rapid on-site evaluation (ROSE). The results of the classification performed via the machine learning model assist, for example, the decision making in diagnosis made by a doctor or the like.

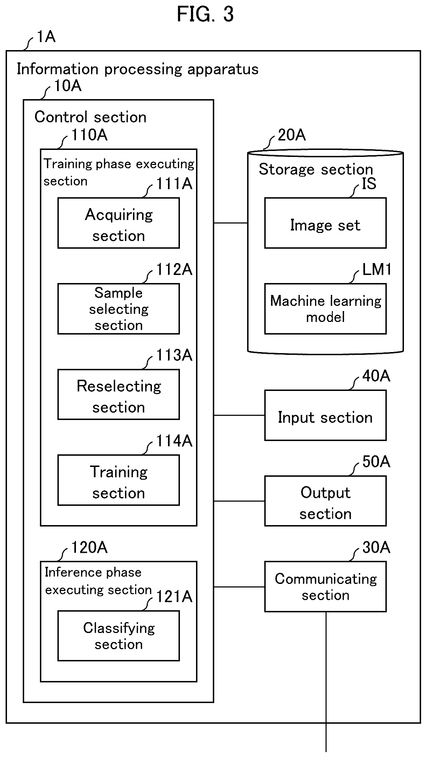

The configuration of the information processing apparatus 1A is described here with reference to Fig. 3. Fig. 3 is a block diagram illustrating a configuration of the information processing apparatus 1A. The information processing apparatus 1A includes a control section 10A, a storage section 20A, a communicating section 30A, an input section 40A, and an output section 50A.

(Communicating section)

The communicating section 30A communicates with an apparatus external to the information processing apparatus 1A over a communication line. A specific configuration of the communication line does not limit the present example embodiment, but examples of the communication line include a wireless local area network (LAN), a wired LAN, a wide area network (WAN), a public network, a mobile data communication network, and a combination thereof. The communicating section 30A transmits, to another apparatus, data supplied from the control section 10A, and supplies the control section 10A with data received from another apparatus.

(Input section)

The input section 40A is a component for accepting an input to the information processing apparatus 1A, and includes input equipment such as, for example, a keyboard, a mouse, a touch panel, a camera, or a microphone. Further, the input section 40A may be a component for accepting data from input equipment via an interface such as, for example, a universal serial bus (USB).

(Output section)

The output section 50A is a component through which output from the information processing apparatus 1A is performed, and includes output equipment such as, for example, a display, a printer, a touch panel, or a speaker. The output section 50A includes an interface such as a USB, and may be a component for outputting data to output equipment via the interface.

(Storage section)

The storage section 20A stores various kinds of information referred to by the control section 10A. Examples of such information include an image set IS and a machine learning model LM1 that are used in machine learning. It should be noted that the phrase "the machine learning model LM1 is stored in the storage section 20A" means that parameters defining the machine learning model LM1 are stored in the storage section 20A.

(Image set)

The image set IS is a set of images used for training the machine learning model LM1. As an example, images included in the image set IS are images which contain, as the subject, a physical object such as a cell specimen. Each of the images included in the image set IS is assigned a label which indicates a class and/or a subclass to which that image belongs. In other words, each of the images included in the image set IS belongs to one of a plurality of classes and belongs one of a plurality of subclasses obtained by further dividing each of the plurality of classes into classifications. The classes and subclasses are classifications divided according to the features of the subjects contained in the images.

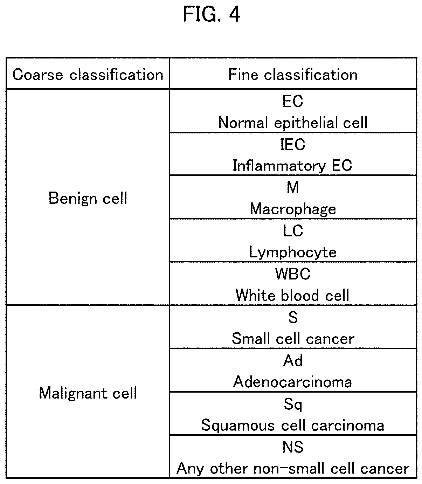

Fig. 4 is a diagram illustrating an example of the classes and the subclasses. Fig. 4 shows that classification into the classes is performed according to whether the cell specimen contained in an image as a subject is benign or malignant. Fig. 4 also shows that classification into the subclasses is performed according to the type of cell specimen contained in an image as a subject. In Fig. 4, for example, the class "benign cell" is divided into classifications which are a plurality of subclasses "EC: normal epithelial cell", "IEC: inflammatory EC", "M: macrophage", "LC: lymphocyte", and "WBC: white blood cell".

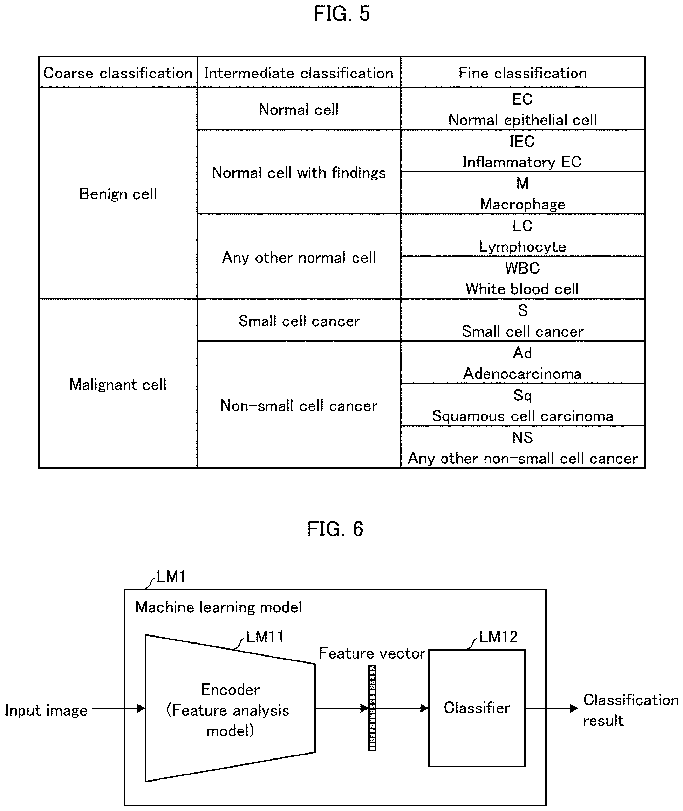

In addition, the image may belong to one of a plurality of middle classes which are obtained by dividing each of the classes into a plurality of classifications and which each have one or more of the subclasses grouped together. An example in which the example illustrated in Fig. 4 is further divided into classifications which are the middle classes is illustrated in Fig. 5. Fig. 5 is a diagram illustrating an example of the classes, the middle classes, and the subclasses.

In Fig. 5, for example, the class "benign cell" is divided into classifications which are three middle classes "normal cell", "normal cell with findings", and "any other normal cell". In addition, in Fig. 5, the middle class "normal cell" has the subclass "EC: normal epithelial cell" grouped, and the middle class "normal cell with findings" has the subclasses "IEC: inflammatory EC" and "M: macrophage" grouped together.

(Machine learning model)

The machine learning model LM1 is generated by machine learning, and is, for example, a neural network. As an example, the machine learning model LM1 includes a first group of layers and a second group of layers. The first group of layers receives an image as an input and generates the features of the image. The second group of layers is connected to the first group of layers, and receives the features of the image as an input and classifies the image, which is the input, as one of the classes or one of the subclasses.

Fig. 6 is a block diagram illustrating an example of the machine learning model LM1. In the example of Fig. 6, the machine learning model LM1 includes a feature analysis model LM11 and a classifier LM12. The feature analysis model LM11 is an Encoder (first group of layers) which receives an input image as an input and generates the features of the input image. The feature analysis model LM 11 is used as a pre-trained model of the classifier LM12. Upon input of an input image which contains a subject, the feature analysis model LM11 outputs the features (feature vector) of the input image.

The classifier LM12 is a Classifier (second group of layers) that is connected to the feature analysis model LM11 and that receives the features of the input image, which are outputted from the feature analysis model LM11, and classifies the input image as one of the classes or one of the subclasses. The machine learning model LM1 outputs, as the result of classification, the class or the subclass which the Classifier has classified the input image as.

(Control section)

The control section 10A includes a training phase executing section 110A and an inference phase executing section 120A, as illustrated in Fig. 3. The training phase executing section 110A includes an acquiring section 111A, a sample selecting section 112A, a reselecting section 113A, and a training section 114A. The inference phase executing section 120A includes a classifying section 121A. The sample selecting section 112A, the reselecting section 113A, the training section 114A, and the classifying section 121A are examples of the selecting means, the training means, and the classifying means in accordance with the present disclosure, respectively.

(Acquiring section)

The acquiring section 111A acquires the image set IS. As an example, the acquiring section 111A acquires the image set IS by receiving the image set IS from another apparatus via the communicating section 30A. Further, the acquiring section 111A may acquire the image set IS which is inputted to the input section 40A. Furthermore, the acquiring section 111A may acquire the image set IS by retrieving the image set IS from a storage location (which may be storage in the information processing apparatus 1A or may be storage external to the information processing apparatus 1A) designated by a user of the information processing apparatus 1A.

(Sample selecting section)

The sample selecting section 112A selects an anchor (image of interest) from the image set IS, and determines, based on the label assigned to the selected anchor and the labels assigned to other images included in the image set IS, the respective sample types of other images included in the image set IS. A sample type refers to a selection result which is for contrastive learning of images which are samples. Examples of the sample type include a positive sample, a hard negative sample, and an easy negative sample.

The positive sample is an image which belongs to the same subclass to which the anchor belongs. Further, the positive sample may be a data augmentation image obtained by subjecting the anchor to data augmentation. Examples of the data augmentation image include an image obtained by rotating the anchor, an image obtained by moving the subject included in the anchor, an image obtained by scaling up or down the subject included in the anchor, an image obtained by flipping the anchor vertically, horizontally, or both, an image obtained by cutting away a portion of the anchor, and an image obtained by changing the hue, the saturation, and/or the lightness of the anchor.

The hard negative sample is an image that belongs to a subclass different from the subclass to which the anchor belongs and that belongs to the same class to which the anchor belongs. The easy negative sample is an image that belongs to a class different from the class to which the anchor belongs. It can be said that the hard negative sample is a sample which is more difficult to distinguish from the positive sample than the easy negative sample is.

As an example, the sample selecting section 112A selects, as the positive sample, an image which belongs to the same subclass to which the anchor belongs. Further, the sample selecting section 112A selects, as the hard negative sample, an image that belongs to a subclass different from the subclass to which the anchor belongs and that belongs to the same class to which the anchor belongs. Furthermore, the sample selecting section 112A selects, as the easy negative sample, an image which belongs a class different from the class to which the anchor belongs. The sample selecting section 112A may select, as the positive sample, a data augmentation image obtained by subjecting the anchor to data augmentation.

The sample selecting section 112A may further select each of the hard negative samples as any of a plurality of sample types. For example, in a case where the image is classified as one of classes, as one of subclasses and further as one of middle classes, among the images having been selected as the hard negative samples, the sample selecting section 112A may select, as a first hard negative sample, an image which belongs to the same middle class to which the anchor belongs, and select, as a second hard negative sample, an image which belongs to a middle class different from the middle class to which the anchor belongs.

(Reselecting section)

Based on the features of the plurality of images each having been selected by the sample selecting section 112A as one of the plurality of sample types, the reselecting section 113A reselects each of the plurality of images. More specifically, the reselecting section 113A reselects, based on at least one of similarities which are the similarity between the features of the anchor and the features of the hard negative sample and the similarity between the features of the anchor and the features of the easy negative sample, each of the plurality of images having been selected by the sample selecting section 112A, as the positive sample, the hard negative sample, or the easy negative sample.

Examples of the similarity between the features of the anchor and the features of the sample (positive sample/hard negative sample/easy negative sample) include a distance (e.g. Euclidean distance) in a predetermined feature space. In this case, it can be said that, based on at least one of distances in the predetermined feature space which are the distance between the anchor and the hard negative sample and the distance between the anchor and the easy negative sample, the reselecting section 113A reselects each of the plurality of images. More specifically, as an example, based on a threshold determined by at least one selected from the group consisting of a confidence interval of the distance between the anchor and the hard negative sample, the maximum value of the distance between the anchor and the hard negative sample, a confidence interval of the distance between the anchor and the easy negative sample, and the minimum value of the distance between the anchor and the easy negative sample, the reselecting section 113A reselects each of the plurality of images.

The similarity between the features of the anchor and the features of the sample is not limited to the above examples. For example, the similarity may be the inner product, the cosine similarity, or the like of a feature vector representing the features of the anchor and a feature vector representing the features of the sample.

In a case where each of the hard negative samples is further selected as one of the plurality of sample types, the reselecting section 113A may perform reselections based on the similarities between the anchor and the respective sample types. For example, in a case where each of the hard negative samples is selected as the first hard negative sample or the second hard negative sample, the reselecting section 113A may reselect, based on at least one of similarities which are the similarity between the features of the anchor and the features of the first hard negative sample, the similarity between the features of the anchor and the features of the second hard negative sample, and the similarity between the features of the anchor and the features of the easy negative sample, each of the plurality of images having been selected by the sample selecting section 112A, as the positive sample, the first hard negative sample, the second hard negative sample, or the easy negative sample.

(Training section)

The training section 114A trains the feature analysis model LM11 with use of the plurality of images each having been reselected by the reselecting section 113A. That is, the training section 114A updates parameters stored in the storage section 20A, the parameters defining the feature analysis model LM 11. In this training, as an example, the training section 114A trains the feature analysis model LM11 to (i) increase the similarity between the features of the anchor and the features of the positive sample, (ii) decrease the similarity between the features of the anchor and the features of the hard negative sample, and (iii) decrease the similarity between the features of the anchor and the features of the easy negative sample, and (iv) make the similarity between the features of the anchor and the features of the hard negative sample greater than the similarity between the features of the anchor and the features of the easy negative sample.

The training section 114A uses the image set IS in which each of the images is assigned a label, to train the machine learning model LM1 having the feature analysis model LM11 and the classifier LM 12 connected together. That is, the training section 114A updates the parameters stored in the storage section 20A, the parameters defining the machine learning model LM1. The details of the training processing carried out by the training section 114A will be described later.

(Classifying section)

The classifying section 121A acquires a target image, which is to be subjected to recognition in an image recognition task and which contains a subject, and inputs the acquired target image to the machine learning model LM1, to classify the inputted target image as one of the classes or subclasses. As an example, the classifying section 121A acquires the target image by receiving the target image from another apparatus via the communicating section 30A. The classifying section 121A may acquire the target image inputted to the input section 40A. Furthermore, the classifying section 121A may acquire the target image by retrieving the target image from a storage location (which may be storage in the information processing apparatus 1A or may be storage external to the information processing apparatus 1A) designated by a user of the information processing apparatus 1A.

The classifying section 121A outputs a classification result. As an example, the classifying section 121A outputs the classification result by writing the classification result in a storage location (which may be storage location in the information processing apparatus 1A, or may be storage external to the information processing apparatus 1A) designated by the user of the information processing apparatus 1A. Further, the classifying section 121A may transmit the classification result via the communicating section 30A, or may output the classification result to output equipment such as a display.

<2. Example process carried out by reselecting section>

Specific examples of the reselecting process carried out by the reselecting section 113A are described here. Specific examples of the reselecting process carried out by the reselecting section 113A include (i) a process of changing the sample type (positive sample, hard negative sample, easy negative sample) and (ii) a process of excluding a sample from the image set used for training. These approaches are described here in sequence.

(Example reselection process 1: change of sample type)

In this example, among images of a sample type of hard negative sample, the reselecting section 113A changes the sample type of an image having features close to the features of the easy negative sample, to the easy negative sample. In other words, in this example, among images each having been selected by the sample selecting section 112A as the hard negative sample, the reselecting section 113A reselects, as the easy negative sample, an image at a distance from the anchor, the distance being greater than a threshold.

More specifically, the reselecting section 113A first computes the 95% confidence interval of a distance Dis_AH from the anchor to the hard negative sample. As an example, the distance Dis_AH is calculated by Formula (1) below. In Formula (1), H is a set of hard negative samples and $h \in H$ is a hard negative sample included in the set H. The expression $Dis\_AH_h$ is the Euclidean distance between the anchor and the hard negative sample h in the predetermined feature space.

$$Dis\_AH = \sum_{h \in H} Dis\_AH_h \quad \cdots (1)$$

Next, given that the upper limit of the 95% confidence interval of the distance Dis_AH is a threshold th, among the images each having been selected as the hard negative sample, the reselecting section 113A changes the sample type of an image having the distance $Dis\_AH_h$ greater than the threshold th, from the hard negative sample to the easy negative sample. Further, among the images each having been selected by the sample selecting section 112A as the easy negative sample, the reselecting section 113A changes the sample type of an image at a distance from the anchor, the distance being smaller than the threshold th, from the easy negative sample to the hard negative sample.

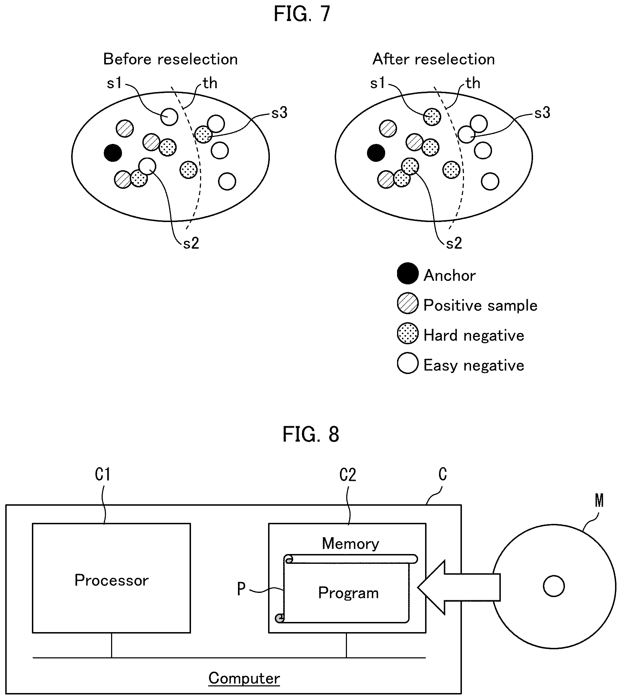

Fig. 7 is a representation of a specific example of the reselecting process. In the example of Fig. 7, the reselecting section 113A changes the sample types of samples s1 and s2 which are the easy negative samples and which are at distances from the anchor, the distances being smaller than the threshold th, from the easy negative samples to the hard negative samples. Further, the reselecting section 113A changes the sample type of a sample s3 having the distance $Dis\_AH_h$ greater than the threshold th, from the hard negative sample to the easy negative sample.

(Example reselection process 2: exclusion)

In this example, among the images each having been selected by the sample selecting section 112A as the hard negative sample, the reselecting section 113A excludes, from the training of the feature analysis model LM11, an image which is at a distance from the anchor, the distance being greater than the threshold th. In other words, among the images each having been selected by the sample selecting section 112A as the hard negative sample, the reselecting section 113A selects, as a sample which is not used for training the feature analysis model LM11, an image which is at a distance from the anchor, the distance being greater than the threshold th.

Further, among the images each having been selected by the sample selecting section 112A as the easy negative sample, the reselecting section 113A excludes, from the training of the feature analysis model LM11, an image which is at a distance from the anchor, the distance being smaller than the threshold th. In other words, among the images each having been selected by the sample selecting section 112A as the easy negative sample, the reselecting section 113A selects, as a sample which is not used for training the feature analysis model LM11, an image which is at a distance from the anchor, the distance being smaller than the threshold th.

(Another example of threshold used for reselection)

The threshold th is not limited to the upper limit of the 95% confidence interval of the distance Dis_AH, but may be another value. As an example, the threshold th may be the maximum value of the distance $Dis\_AH_h$ between the anchor and the hard negative sample h, or may be the minimum value of a distance $Dis\_AE_n$ between the anchor and an easy negative sample $n \in N$ (N is a set of easy negative samples). As another example, the threshold th may be the lower limit of the 95% confidence interval of a distance Dis_AE ($\Sigma_{n \in N} Dis\_AE_n$) from the anchor to the easy negative sample. As still another example, the threshold th may be the average of the upper limit of the 95% confidence interval of the distance Dis_AH and the lower limit of the 95% confidence interval of the distance Dis_AE.

(Example reselection process in case of selection as one of plurality of hard negative samples)

In a case where each of the hard negative samples is further selected as one of the plurality of sample types, the reselecting section 113A may perform reselections based on the similarities between the anchor and the respective sample types. As an example, in a case where each of the hard negative samples is selected as the first hard negative sample or the second hard negative sample, given that, for example, the upper limit of the 95% confidence interval of a distance Dis_AH1 from the anchor to the first hard negative sample is a threshold th1, the reselecting section 113A may change the first hard negative sample which is at a distance from the anchor, the distance being greater than the threshold th1, to the second hard negative sample. As another example, the reselecting section 113A may change the second hard negative sample which is at a distance from the anchor, the distance being smaller than the threshold th1, to the first hard negative sample. The threshold th1 is not limited to the upper limit of the 95% confidence interval of the distance Dis_AH1, but may be, for example, (i) the maximum value of the distance $Dis\_AH1_{h1}$ from the anchor to the first hard negative sample, (ii) the lower limit of a confidence interval of a distance Dis_AH2 from the anchor to the second hard negative sample, (iii) the minimum value of a distance $Dis\_AH2_{h2}$ from the anchor to the second hard negative sample, or (iv) the average of the upper limit of the 95% confidence interval of the distance Dis_AH1 and the lower limit of the confidence interval of the distance Dis_AH2.

Given that, for example, the upper limit of the 95% confidence interval of the distance Dis_AH2 from the anchor to the second hard negative sample is a threshold th2, the reselecting section 113A may change the second hard negative sample which is at a distance to the anchor, the distance being greater than the threshold th2, to the easy negative sample and change the easy negative sample which is at a distance to the anchor, the distance being smaller than the threshold th2, to the second hard negative sample. The threshold th2 is not limited to the upper limit of the 95% confidence interval of the distance Dis_AH2, but may be, for example, (i) the maximum value of the distance $Dis\_AH2_{h2}$, (ii) the lower limit of a confidence interval of the distance Dis_AE from the anchor to the easy negative sample, (iii) the minimum value of the distance $Dis\_AE_n$, or (iv) the average of the upper limit of the 95% confidence interval of the distance Dis_AH2 and the lower limit of a confidence interval of the distance Dis_AE.

<3. Example process carried out by training section>

Next, a process (a) by which the training section 114A trains the feature analysis model LM11 and a process (b) by which the training section 114A trains the machine learning model LM1 having the classifier LM12 and the feature analysis model LM11 connected together are described here.

(Example process 1 by which to train feature analysis model LM11)

In this example, the training section 114A uses a loss function via which the contribution varies according to whether the image is a positive sample, a hard negative sample, or an easy negative sample, to train the machine learning model LM1. As an example, the training section 114A trains the feature analysis model LM11 to (i) increase the similarity (e.g. the inner product of feature vectors) between the features of the anchor and the features of the positive sample, (ii) decrease the similarity between the features of the anchor and the features of the hard negative sample, and (iii) decrease the similarity between the features of the anchor and the features of the easy negative sample, and (iv) make the similarity between the features of the anchor and the features of the hard negative sample greater than the similarity between the features of the anchor and the features of the easy negative sample.

As an example, the training section 114A trains the feature analysis model LM11 such that the value of Formula (2) below, which is a loss function, decreases.

$$L = \sum_{i \in I} L_i = \sum_{i \in I} \frac{-1}{|\mathrm{P}(i)|} \sum_{p \in P(i)} log \frac{exp\left(z_i \cdot z_p / \tau\right)}{W_n \sum_{n \in N(i)} exp\left(z_i \cdot \frac{z_n}{\tau}\right) + W_h \sum_{h \in H(i)} exp\left(z_i \cdot \frac{z_h}{\tau}\right)}$$

$$\cdots (2)$$

I: a set of images which belong to the class to which the anchor belongs

i: an anchor (image of interest)

$z_i$: the feature vector of the anchor i

P(i): a set of positive samples with respect to the anchor i

p: a positive sample included in the set P(i)

$z_p$: the feature vector of the positive sample p

N(i): a set of easy negative samples with respect to the anchor i

n: an easy negative sample included in the set N(i)

$z_n$: the feature vector of the easy negative sample n

$W_n$: a weighting factor assigned to the easy negative sample n

H(i): a set of hard negative samples with respect to the anchor i

h: a hard negative sample included in the set H(i)

$z_h$: the feature vector of the hard negative sample h

$W_h$: a weighting factor assigned to the hard negative sample h

·: an inner product

$\tau$: a temperature parameter (constant)

The training section 114A trains the feature analysis model LM11 such that the inner product of the feature vector of the anchor and the feature vector of the positive sample increases, in order to reduce the value of Formula (2), which is a loss function. Further, the training section 114A trains the feature analysis model LM11 such that the inner product of the feature vector of the anchor and the feature vector of the hard negative sample decreases. Furthermore, the training section 114A trains the feature analysis model LM11 such that the inner product of the feature vector of the anchor and the feature vector of the easy negative sample decreases.

That is, in Formula (2), features are in feature vector form, and a similarity between the feature vector of the anchor and the feature vector of the positive sample is based on the inner product of the feature vector of the anchor and the feature vector of the positive sample, the similarity between the feature vector of the anchor and the feature vector of the hard negative sample is based on the inner product of the feature vector of the anchor and the feature vector of the hard negative sample, and the similarity between the feature vector of the anchor and the feature vector of the easy negative sample is based on the inner product of the feature vector of the anchor and the feature vector of the easy negative sample.

In Formula (2), the sum of the weighting factor $W_h$ assigned to the hard negative sample and the weighting factor $W_n$ assigned to the easy negative sample is 1.0. In addition, the weighting factor $W_h$ is set to be greater than the weighting factor $W_n$. Thus, the value of Formula (2) more significantly varies according to the inner product of the feature vector of the anchor and the feature vector of the hard negative sample than according to the inner product of the feature vector of the anchor and the feature vector of the easy negative sample. That is, the training section 114A carries out the training such that the hard negative sample is located away from the anchor. In other words, the training section 114A trains the feature analysis model LM11 to make the similarity between the features of the anchor and the features of the hard negative sample greater than the features of the anchor and the features of the easy negative sample.

(Example process 2 by which to train feature analysis model LM11)

As described above, an image included in the image set IS may belong to one of a plurality of middle classes which are obtained by dividing each of the classes into a plurality of classifications and which each have one or more of the subclasses grouped together. In this case, each of the images is selected as the positive sample, the hard negative sample, or the easy negative sample described above, and in addition, each of the hard negative samples is selected as the first hard negative sample or the second hard negative sample, as described above.

In this case, as an example, the training section 114A trains the feature analysis model LM11 to make the similarity between the features of the anchor and the features of the first hard negative sample greater than the similarity between the features of the anchor and the features of the second hard negative sample. As an example, the training section 114A trains the feature analysis model LM11 such that the value of Formula (3) below, which is a loss function, decreases.

$$L = \sum_{i \in I} L_i$$

$$= \sum_{i \in I} \frac{-1}{|\mathrm{P}(i)|} \sum_{p \in P(i)} log \frac{exp(z_i \cdot z_p / \tau)}{W_n \sum_{n \in N(i)} exp\left(z_i \cdot \frac{z_n}{\tau}\right) + W_{h1} \sum_{h1 \in H1(i)} exp\left(z_i \cdot \frac{z_{h1}}{\tau}\right) + W_{h2} \sum_{h2 \in H2(i)} exp\left(z_i \cdot \frac{z_{h2}}{\tau}\right)}$$

$$\cdots (3)$$

I: a set of images which belong to the class to which the anchor belongs

i: an anchor (image of interest)

$z_i$: the feature vector of the anchor i

P(i): a set of positive samples with respect to the anchor i

p: a positive sample included in the set P(i)

$z_p$: the feature vector of the positive sample p

N(i): a set of easy negative samples with respect to the anchor i

n: an easy negative sample included in the set N(i)

$z_n$: the feature vector of the easy negative sample n

$W_n$: a weighting factor assigned to the easy negative sample n

HI (i): a set of first hard negative samples with respect to the anchor i

h1: a first hard negative sample included in the set H1(i)

$z_{h1}$: the feature vector of the first hard negative sample h1

$W_{h1}$: a weighting factor assigned to the first hard negative sample h1

H2(i): a set of second hard negative samples with respect to the anchor i

h2: a second hard negative sample included in the set H2(i)

$z_{h2}$: the feature vector of the second hard negative sample h2

$W_{h2}$: a weighting factor assigned to the second hard negative sample h2

·: an inner product

$\tau$: a temperature parameter (constant)

The training section 114A trains the feature analysis model LM11 such that the inner product of the feature vector of the anchor and the feature vector of the first hard negative sample decreases, in order to reduce the value of Formula (3), which is a loss function. Further, the training section 114A trains the feature analysis model LM11 such that the inner product of the feature vector of the anchor and the feature vector of the second hard negative sample decreases. Furthermore, the training section 114A trains the feature analysis model LM11 such that the inner product of the feature vector of the anchor and the feature vector of the positive sample increases. Furthermore, the training section 114A trains the feature analysis model LM11 such that the inner product of the feature vector of the anchor and the feature vector of the easy negative sample decreases.

In Formula (3), the sum of the weighting factor $W_{h1}$ assigned to the first hard negative sample, the weighting factor $W_{h2}$ assigned to the second hard negative sample, and the weighting factor $W_n$ assigned to the easy negative sample is 1.0. In addition, the weighting factor $W_{h1}$ and the weighting factor $W_{h2}$ are each set to be greater than the weighting factor $W_n$. Thus, the value of Formula (3) more significantly varies according to the inner product of the feature vector of the anchor and the feature vector of the hard negative sample (first hard negative sample and second hard negative sample) than according to the inner product of the feature vector of the anchor and the feature vector of the easy negative sample. That is, the training section 114A carries out the training such that the first hard negative sample and the second hard negative sample are located away from the anchor.

In addition, the Formula (3), the weighting factor $W_{h1}$ may be set to be greater than the $W_{h2}$. In this case, the value of Formula (3) more significantly varies according to the inner product of the feature vector of the anchor and the feature vector of the first hard negative sample than according to the inner product of the feature vector of the anchor and the feature vector of the second hard negative sample. That is, the training section 114A carries out the training such that the first hard negative sample is located away from the anchor. In other words, the training section 114A trains the feature analysis model LM11 to make the similarity between the features of the anchor and the features of the first hard negative sample greater than the features of the anchor and the features of the second hard negative sample.

(Example process by which to train machine learning model LM1)

The training section 114A uses a plurality of images and training labels corresponding to results of classification of the plurality of images into the plurality of classes or the plurality of subclasses, to train the machine learning model LM1.

As the loss function (second loss function) and a method by which the training section 114A trains the machine learning model LM1, known methods are used. Examples of such known methods include a method of using cross entropy to minimize the error between output data from the machine learning model LM1 and the training labels. The training section 114A mainly trains the classifier LM12, and if necessary, may train the feature analysis model LM11 to make fine adjustments to the feature analysis model LM11.

<4. Example advantage of information processing apparatus 1A>

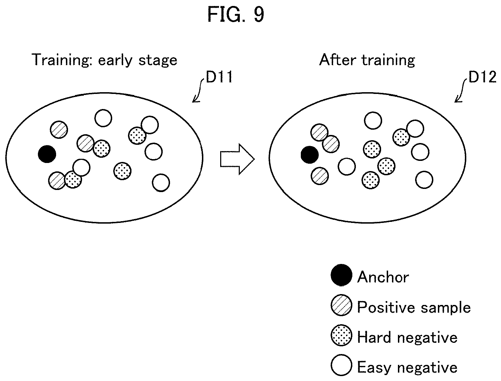

Fig. 9 is a representation of an example result of training of the machine learning model in a case where the reselection is not carried out. In the example of Fig. 9, a distribution D11 indicates an example distribution of samples (images) at an early stage of the training in a predetermined feature space, and a distribution D12 indicates the distribution of the samples after the training in the feature space. As indicated in the distribution D11, the anchor and the positive samples are located close to each other in the feature space. Meanwhile, some hard negative samples are as close to the anchor as are the positive samples, other hard negative samples are as distant from the anchor as are the easy negative samples. In this case, the hard negative samples in general are incorrectly recognized as if being already sufficiently distant from the anchor in a pre-trained state, and as a result, the training does not properly proceed in some cases.

Furthermore, in the distribution D11, the easy negative samples are generally distant from the anchor, but some easy negative samples are as close to the anchor as the hard negative samples. This may occur in a case where those easy negative samples happen to have features close to those of the hard negative samples, or because of incorrect labelling. There is an instance where different diagnoses are made by different doctors, and an assigned label is therefore not necessarily proper. Using such a group of images to train the machine learning model can cause the easy negative samples to be insufficiently distant from the anchor, as illustrated in the distribution D12.

In contrast, with the information processing apparatus 1A in accordance with the present disclosure, it is possible to more properly train the feature analysis model LM11 through image reselection carried out by the reselecting section 113A, even in a case where training data contains images (images which are the hard negative samples in terms of the distance from the anchor in the feature space) which are classified as the easy negative samples on the basis of label information but are actually relatively close in distance to the anchor, or images (images which are the easy negative samples in terms of the distance from the anchor in the feature space) which are classified as the hard negative samples on the basis of the label information but are actually relatively far away from the anchor. In addition, with the information processing apparatus 1A, it is possible to more properly train the feature analysis model LM11 through the image reselection carried out by the reselecting section 113A, even in a case where labeled training data contains incorrect label information.

With the information processing apparatus 1A in accordance with the present disclosure, the feature analysis model LM11 is trained such that the similarity between the features of an anchor and the features of the hard negative sample is greater than the similarity between the features of the anchor and the features of the easy negative sample. This makes it possible to more increase the classification accuracy of the machine learning model LM1.

In the information processing apparatus 1A in accordance with the present disclosure, an image included in the image set IS belongs to one of a plurality of classes and belongs to one of a plurality of subclasses obtained by further dividing each of the plurality of classes into classifications, a label assigned to an image indicates the class and the subclass to which the image belongs, the sample selecting section 112A selects, as the positive sample, an image which belongs to the subclass to which the anchor belongs, and selects, as the hard negative sample, an image which belongs to a subclass different to the subclass to which the anchor belongs and belongs the class to which the anchor belongs, and selects, as the easy negative sample, an image which belongs to a class different from the class to which the anchor belongs. Thus, with the information processing apparatus 1A, by using images which belong to classes and subclasses, it is possible to train the feature analysis model LM 11 so that the machine learning model LM 1 has high inference accuracy.

In the information processing apparatus 1A, the reselecting section 113A reselects each of images included in the image set IS, on the basis of at least one of distances in a predetermined feature space which are the distance between the anchor and the hard negative sample and the distance between the anchor and the easy negative sample. Thus, with the information processing apparatus 1A, it is possible to reflect distances from the anchor in a feature space in sample type selection. This enables more proper training of the feature analysis model LM11.

In the information processing apparatus 1A, the reselecting section 113A reselects each of images included in the image set IS, on the basis of a threshold which is determined by at least one selected from the group consisting of a confidence interval of the distance between the anchor and the hard negative sample, the maximum value of the distance between the anchor and the hard negative sample, a confidence interval of the distance between the anchor and the easy negative sample, and the minimum value of the distance between the anchor and the easy negative sample. Thus, with the information processing apparatus 1A, by reselecting each of images with use of a confidence interval, the upper limit, or the like of the distance between the anchor and the hard negative sample in a feature space, it is possible to more properly train the feature analysis model LM11.

In the information processing apparatus 1A, among the images each having been selected by the sample selecting section 112A as the hard negative sample, the reselecting section 113A selects, as the easy negative sample, an image which is at a distance from the anchor, the distance being greater than a predetermine threshold. Thus, with the information processing apparatus 1A, by changing the sample type of an image which is at a distance from the anchor, the distance being greater than the predetermine threshold, from the hard negative sample to the easy negative sample, it is possible to prevent the hard negative samples in general from being incorrectly recognized as if being already sufficiently away from the anchor in a pre-trained state.

In the information processing apparatus 1A, among the images each having been selected by the sample selecting section 112A as the easy negative sample, the reselecting section 113A selects, as the hard negative sample, an image which is at a distance from the anchor, the distance being smaller than a threshold. Thus, by changing the sample type of an image which is at a distance from the anchor, the distance being smaller than a predetermine threshold, from the easy negative sample to the hard negative sample, it is possible to prevent occurrence of an event of the easy negative sample being insufficiently distant from the anchor after training.

In the information processing apparatus 1A, among the images each having been selected by the sample selecting section 112A as the hard negative sample, the reselecting section 113A selects, as a sample which is not used for training the feature analysis model LM11, an image which is at a distance from the anchor, the distance being greater than a threshold. Thus, by excluding, from the training of the feature analysis model LM11, the hard negative sample which is at a distance from the anchor, the distance being greater than a predetermine threshold, it is possible to prevent the hard negative samples in general from being incorrectly recognized as if being already sufficiently away from the anchor in a pre-trained state.

In the information processing apparatus 1A, among the images each selected by the sample selecting section 112A as the easy negative sample, the reselecting section 113A selects, as a sample which is not used for training the machine learning model, an image which is at a distance from the image of interest, the distance being smaller than a threshold. Thus, by excluding, from the training of the feature analysis model LM11, the sample type of an image which is at a distance from the anchor, the distance being smaller than a predetermine threshold, it is possible to prevent occurrence of an event of the easy negative sample being insufficiently distant from the anchor after training.

In the information processing apparatus 1A, the features of a sample used for training the feature analysis model LM11 are in feature vector form, and the similarity between the feature vector of the anchor and the feature vector of the positive sample is based on the inner product of the feature vector of the anchor and the feature vector of the positive sample, the similarity between the feature vector of the anchor and the feature vector of the hard negative sample is based on the inner product of the feature vector of the anchor and the feature vector of the hard negative sample, and the similarity between the feature vector of the anchor and the feature vector of the easy negative sample is based on the inner product of the feature vector of the anchor and the feature vector of the easy negative sample. Thus, with the information processing apparatus 1A, it is possible to train the feature analysis model LM11 on the basis of the inner product of feature vectors.

In the information processing apparatus 1A, an image included in the image set IS further belongs to one of a plurality of middle classes which are obtained by dividing each of the plurality of classes into a plurality of classifications and which each have one or more of the subclasses grouped together; the sample selecting section 112A takes, as a first hard negative sample, an image which is the hard negative sample and which belongs to the same middle class as the anchor belongs, and takes, as a second hard negative sample, an image which is the hard negative sample and which belongs to a middle class different from the middle class to which the anchor belongs; the reselecting section 113A reselects, based on at least one of similarities which are the similarity between the features of the anchor and the features of the first hard negative sample, the similarity between the features of the anchor and the features of the second hard negative sample, and the similarity between the features of the anchor and the features of the easy negative sample, each of the plurality of images having been selected by the sample selecting section 112A, as the positive sample, the first hard negative sample, the second hard negative sample, or the easy negative sample; and the training section 114A trains the feature analysis model LM11 to make the similarity between the features of the anchor and the features of the hard negative sample greater than the similarity between the features of the anchor and the features of the second hard negative sample. Thus, with the information processing apparatus 1A, the feature analysis model LM11 is trained in consideration of the first hard negative sample and the second hard negative sample obtained by further selecting each of the hard negative samples. This provides an example advantage of making it possible to train the feature analysis model LM11 so that the machine learning model LM1 has high inference accuracy.

In the information processing apparatus 1A, the subject contained in an image used for the training is a cell specimen, the image is classified as one of classes according to whether the cell specimen contained in the image is benign or malignant, and classified as one of subclasses according to the type of cell specimen contained in the image. Thus, the information processing apparatus 1A provides an example advantage of making it possible to increase the inference accuracy of the machine learning model LM1, which classifies an input image as one of classes that indicate whether the cell specimen is benign or malignant and classifies as one of subclasses that corresponds to the type of cell specimen.

In the information processing apparatus 1A, the sample selecting section 112A takes, as the positive sample, a data augmentation image obtained by subjecting the anchor to data augmentation. Thus, with the information processing apparatus 1A, by performing machine learning in which a data augmentation image obtained by subjecting the anchor to data augmentation is used as the positive sample, it is possible to more properly train the feature analysis model LM11.

In the information processing apparatus 1A, the machine learning model LM1 includes: a first group of layers which receives an image as an input and generates the features of the image; and a second group of layers connected to the first group of layers, the second group of layers receiving the features of the image as an input and classifying the image, which is the input, as one of classes or subclasses, and the training section 114A uses a plurality of images and training labels corresponding to the respective results of classifying each of the plurality of images as one of the classes or the subclasses, to train the machine learning model LM1. Thus, the information processing apparatus 1A provides an example advantage of making it possible to generate the machine learning model LM1 having higher inference accuracy.

The information processing apparatus 1A includes a classifying section 121A for, upon input of an image containing a subject to the machine learning model LM1, classifying the inputted image as one of classes or subclasses. Thus, the information processing apparatus 1A provides an example advantage of making it possible to more accurately classify an image containing a subject as one of classes or subclasses, by using the machine learning model LM1 generated by machine learning.

[Software Implementation Example]

Some or all of the functions of the training apparatus 1 and the information processing apparatus 1A (hereinafter, also referred to as "each apparatus above") may be implemented by hardware such as an integrated circuit (IC chip), or may be implemented by software.

In the latter case, each apparatus above is provided by, for example, a computer that executes instructions of a program that is software implementing the foregoing functions. An example (hereinafter, computer C) of such a computer is illustrated in Fig. 8. Fig. 8 is a block diagram illustrating a hardware configuration of the computer C which functions as each apparatus above.

The computer C includes at least one processor C1 and at least one memory C2. The memory C2 has recorded thereon a program P for causing the computer C to operate as each apparatus above. The processor C1 of the computer C retrieves the program P from the memory C2 and executes the program P, so that the functions of each apparatus above are implemented.

Examples of the processor C1 can include a central processing unit (CPU), a graphic processing unit (CPU), a digital signal processor (DSP), a micro processing unit (MPU), a floating point number processing unit (FPU), a physics processing unit (PPU), a tensor processing unit (TPU), a quantum processor, a microcontroller, and a combination thereof. Examples of the memory C2 can include a flash memory, a hard disk drive (HDD), a solid state drive (SSD), and a combination thereof.

The computer C may further include a random access memory (RAM) into which the program P is loaded at the time of execution and in which various kinds of data are temporarily stored. The computer C may further include a communication interface via which data is transmitted to and received from another apparatus. The computer C may further include an input-output interface via which input-output equipment such as a keyboard, a mouse, a display, or a printer is connected.

The program P can be recorded on a non-transitory tangible recording medium M capable of being read by the computer C. The recording medium M can be, for example, a tape, a disk, a card, a semiconductor memory, a programmable logic circuit, or the like. The computer C can obtain the program P via such a recording medium M. The program P can be transmitted via a transmission medium. Examples of such a transmission medium can include a communication network and a broadcast wave. The computer C can obtain the program P also via such a transmission medium.

The above-described functions of each apparatus above may be implemented by a single processor provided in a single computer, may be implemented by the cooperation among a plurality of processors provided in a single computer, or may be implemented by the cooperation among a plurality of processors provided in a plurality of respective computers. Further, the program for causing each apparatus above to implement the above-described functions may be stored in a single memory provided in a single computer, may be stored in a distributed manner in a plurality of memories provided in a single computer, or may be stored in a distributed manner in a plurality of memories provided in a plurality of respective computers.

[Additional remark A]

The whole or part of the example embodiments disclosed above can be described as, but not limited to, the following supplementary notes.

(Supplementary note A1)

A training apparatus, including:

a selecting means for selecting, based on a label assigned to an image of interest included in a plurality of images and a label assigned to each of the plurality of images, each of the plurality of images as a positive sample, a hard negative sample, or an easy negative sample;
a reselecting means for reselecting, based on at least one of similarities which are a similarity between features of the image of interest and features of the hard negative sample and a similarity between the features of the image of interest and features of the easy negative sample, each of the plurality of images having been selected by the selecting means, as the positive sample, the hard negative sample, or the easy negative sample; and
a training means for using the plurality of images each having been reselected by the reselecting means to train a machine learning model to (i) increase a similarity between the features of the image of interest and features of the positive sample, (ii) decrease the similarity between the features of the image of interest and the features of the hard negative sample and the similarity between the features of the image of interest and the features of the easy negative sample, and (iii) make the similarity between the features of the image of interest and the features of the hard negative sample greater than the similarity between the features of the image of interest and the features of the easy negative sample.

(Supplementary note A2)

The training apparatus described in supplementary note A1, in which:

the plurality of images each belong to one of a plurality of classes and each belong to one of a plurality of subclasses obtained by further dividing each of the plurality of classes into classifications;
the label indicates a class and a subclass to which the plurality of images each belong;
the selecting means is configured to:

select, as the positive sample, an image which belongs to a subclass to which the image of interest belongs;
select, as the hard negative sample, an image which belongs to a subclass different from the subclass to which the image of interest belongs, and belongs to a class to which the image of interest belongs; and
select, as the easy negative sample, an image which belongs to a class different from the class to which the image of interest belongs.

(Supplementary note A3)

The training apparatus described in supplementary note A1 or A2, in which
based on at least one of distances in a predetermined feature space which are a distance between the image of interest and the hard negative sample and a distance between the image of interest and the easy negative sample, the reselecting means is configured to reselect each of the plurality of images.

(Supplementary note A4)

The training apparatus described in supplementary note A3, in which
based on a threshold determined by at least one selected from the group consisting of a confidence interval of the distance between the image of interest and the hard negative sample, a maximum value of the distance between the image of interest and the hard negative sample, a confidence interval of the distance between the image of interest and the easy negative sample, and a minimum value of the distance between the image of interest and the easy negative sample, the reselecting means is configured to reselect each of the plurality of images.

(Supplementary note A5)

The training apparatus described in supplementary note A3, in which
among images each having been selected as the hard negative sample by the selecting means, the reselecting means is configured to select, as the easy negative sample, an image which is at a distance from the image of interest, the distance being greater than a threshold.

(Supplementary note A6)

The training apparatus described in supplementary note A3, in which
among images each having been selected as the easy negative sample by the selecting process, the reselecting means is configured to select, as the hard negative sample, an image which is at a distance from the image of interest, the distance being smaller than a threshold.

(Supplementary note A7)

The training apparatus described in supplementary note A3, in which
among images each having been selected as the hard negative sample by the selecting means, the reselecting means is configured to select, as a sample which is not used for training the machine learning model, an image which is at a distance from the image of interest, the distance being greater than a threshold.

(Supplementary note A8)

The training apparatus described in supplementary note A3, in which
among images each having been selected as the easy negative sample by the selecting means, the reselecting means is configured to select, as a sample which is not used for training the machine learning model, an image which is at a distance from the image of interest, the distance being smaller than a threshold.

(Supplementary note A9)

The training apparatus described in any one of supplementary notes A1 to A8, in which

features referred to in the training means are in feature vector form, and
a similarity between a feature vector of the image of interest and a feature vector of the positive sample is based on an inner product of the feature vector of the image of interest and the feature vector of the positive sample, a similarity between the feature vector of the image of interest and a feature vector of the hard negative sample is based on an inner product of the feature vector of the image of interest and the feature vector of the hard negative sample, and a similarity between the feature vector of the image of interest and a feature vector of the easy negative sample is based on an inner product of the feature vector of the image of interest and the feature vector of the easy negative sample.

(Supplementary note A10)

The training apparatus described in supplementary note A2, in which:

the plurality of images each further belong to one of a plurality of middle classes which are obtained by dividing each of the plurality of classes into a plurality of classifications and which each have one or more of the subclasses grouped together;
the selecting means is configured to:

take, as a first hard negative sample, an image which is the hard negative sample and which belongs to a middle class the same as a middle class to which the image of interest belongs, and
take, as a second hard negative sample, an image which is the hard negative sample and which belongs to a middle class different from the middle class to which the image of interest belongs;

the reselecting means is configured to
reselect, based on at least one of similarities which are a similarity between the features of the image of interest and features of the first hard negative sample, a similarity between the features of the image of interest and features of the second hard negative sample, and the similarity between the features of the image of interest and the features of the easy negative sample, each of the plurality of images having been selected by the selecting means, as the positive sample, the first hard negative sample, the second hard negative sample, or the easy negative sample; and
the training means is configured to
train the machine learning model to make the similarity between the features of the image of interest and the features of the first hard negative sample greater than the similarity between the features of the image of interest and the features of the second hard negative sample.

(Supplementary note A11)

The training apparatus described in supplementary note A2 or A10, in which

a subject contained in each of the plurality of images is a cell specimen, and
the plurality of images are classified into the plurality of classes according to whether cell specimens contained in the plurality of images are benign or malignant, and classified into the plurality of subclasses according to types of cell specimens contained in the plurality of images.

(Supplementary note A12)

The training apparatus described in any one of supplementary notes A1 to A11, in which
the selecting means is configured to take, as the positive sample, a data augmentation image obtained by subjecting the image of interest to data augmentation.

(Supplementary note A13)

The training apparatus described in supplementary note A2, in which:

the machine learning model includes

a first group of layers which receives an image as an input and generates features of the image, and
a second group of layers connected to the first group of layers, the second group of layers receiving the features of the image as an input and classifying the image, which is the input, as one of the plurality of classes or one of the plurality of subclasses; and

the training means is configured to use the plurality of images and training labels corresponding to results of classification of the plurality of images into the plurality of classes or the plurality of subclasses, to train the machine learning model.

(Supplementary note A14)

A classifying apparatus including
a classifying means for, upon input of an image containing a subject to the machine learning model having been trained by the training apparatus described in any one of supplementary notes A1 to A13, classifying the image as one of classes or subclasses.

[Additional remark B]

The whole or part of the example embodiments disclosed above can be described as, but not limited to, the following supplementary notes.

(Supplementary note B1)

A training method, including:

at least one processor selecting, based on a label assigned to an image of interest included in a plurality of images and a label assigned to each of the plurality of images, each of the plurality of images as a positive sample, a hard negative sample, or an easy negative sample;
the at least one processor reselecting, based on at least one of similarities which are a similarity between features of the image of interest and features of the hard negative sample and a similarity between the features of the image of interest and features of the easy negative sample, each of the plurality of images having been selected by the selecting, as the positive sample, the hard negative sample, or the easy negative sample; and
the at least one processor using the plurality of images each having been reselected by the reselecting to train a machine learning model to (i) increase a similarity between the features of the image of interest and features of the positive sample, (ii) decrease the similarity between the features of the image of interest and the features of the hard negative sample and the similarity between the features of the image of interest and the features of the easy negative sample, and (iii) make the similarity between the features of the image of interest and the features of the hard negative sample greater than the similarity between the features of the image of interest and the features of the easy negative sample.

(Supplementary note B2)

The training method described in supplementary note B1, in which:

the plurality of images each belong to one of a plurality of classes and each belong to one of a plurality of subclasses obtained by further dividing each of the plurality of classes into classifications;
the label indicates a class and a subclass to which the plurality of images each belong;
in the selecting, the at least one processor

selects, as the positive sample, an image which belongs to a subclass to which the image of interest belongs;
selects, as the hard negative sample, an image which belongs to a subclass different from the subclass to which the image of interest belongs, and belongs to a class to which the image of interest belongs; and
selects, as the easy negative sample, an image which belongs to a class different from the class to which the image of interest belongs.

(Supplementary note B3)

The training method described in supplementary note B1 or B2, in which
in the reselecting, based on at least one of distances in a predetermined feature space which are a distance between the image of interest and the hard negative sample and a distance between the image of interest and the easy negative sample, the at least one processor reselects each of the plurality of images.

(Supplementary note B4)

The training method described in supplementary note B3, in which
in the reselecting, based on a threshold determined by at least one selected from the group consisting of a confidence interval of the distance between the image of interest and the hard negative sample, a maximum value of the distance between the image of interest and the hard negative sample, a confidence interval of the distance between the image of interest and the easy negative sample, and a minimum value of the distance between the image of interest and the easy negative sample, the at least one processor reselects each of the plurality of images.

(Supplementary note B5)

The training method described in supplementary note B3, in which
in the reselecting, among images each having been selected as the hard negative sample by the selecting, the at least one processor selects, as the easy negative sample, an image which is at a distance from the image of interest, the distance being greater than a threshold.

(Supplementary note B6)

The training method described in supplementary note B3, in which

in the reselecting, among images each having been selected as the easy negative sample by the selecting, the at least one processor selects, as the hard negative sample, an image which is at a distance from the image of interest, the distance being smaller than a threshold.

(Supplementary note B7)

The training method described in supplementary note B3, in which
in the reselecting, among images each having been selected as the hard negative sample by the selecting, the at least one processor selects, as a sample which is not used for training the machine learning model, an image which is at a distance from the image of interest, the distance being greater than a threshold.

(Supplementary note B8)

Training method described in supplementary note B3, in which
in the reselecting, among images each having been selected as the easy negative sample by the selecting, the at least one processor selects, as a sample which is not used for training the machine learning model, an image which is at a distance from the image of interest, the distance being smaller than a threshold.

(Supplementary note B9)

The training method described in any one of supplementary notes B1 to B8, in which

features referred to in the training are in feature vector form, and
a similarity between a feature vector of the image of interest and a feature vector of the positive sample is based on an inner product of the feature vector of the image of interest and the feature vector of the positive sample, a similarity between the feature vector of the image of interest and a feature vector of the hard negative sample is based on an inner product of the feature vector of the image of interest and the feature vector of the hard negative sample, and a similarity between the feature vector of the image of interest and a feature vector of the easy negative sample is based on an inner product of the feature vector of the image of interest and the feature vector of the easy negative sample.

(Supplementary note B10)

The training method described in supplementary note B2, in which:

the plurality of images each further belong to one of a plurality of middle classes which are obtained by dividing each of the plurality of classes into a plurality of classifications and which each have one or more of the subclasses grouped together;
in the selecting, the at least one processor

takes, as a first hard negative sample, an image which is the hard negative sample and which belongs to a middle class the same as a middle class to which the image of interest belongs, and
takes, as a second hard negative sample, an image which is the hard negative sample and which belongs to a middle class different from the middle class to which the image of interest belongs;

in the reselecting, the at least one processor
reselects, based on at least one of similarities which are a similarity between the features of the image of interest and features of the first hard negative sample, a similarity between the features of the image of interest and features of the second hard negative sample, and the similarity between the features of the image of interest and the features of the easy negative sample, each of the plurality of images having been selected by the selecting, as the positive sample, the first hard negative sample, the second hard negative sample, or the easy negative sample; and
in the training, the at least one processor
trains the machine learning model to make the similarity between the features of the image of interest and the features of the first hard negative sample greater than the similarity between the features of the image of interest and the features of the second hard negative sample.

(Supplementary note B11)

The training method described in supplementary note B2 or B10, in which

a subject contained in each of the plurality of images is a cell specimen, and
the plurality of images are classified into the plurality of classes according to whether cell specimens contained in the plurality of images are benign or malignant, and classified into the plurality of subclasses according to types of cell specimens contained in the plurality of images.

(Supplementary note B12)

The training method described in any one of supplementary notes B1 to B11, in which
in the selecting, the at least one processor takes, as the positive sample, a data augmentation image obtained by subjecting the image of interest to data augmentation.

(Supplementary note B13)

The training method described in supplementary note B2, in which:

the machine learning model includes

a first group of layers which receives an image as an input and generates features of the image, and
a second group of layers connected to the first group of layers, the second group of layers receiving the features of the image as an input and classifying the image, which is the input, as one of the plurality of classes or one of the plurality of subclasses; and

in the training, the at least one processor uses the plurality of images and training labels corresponding to results of classification of the plurality of images into the plurality of classes or the plurality of subclasses, to train the machine learning model.

(Supplementary note B14)

A classifying method including
at least one processor classifying, upon input of an image containing a subject to the machine learning model having been trained by the training method described in any one of supplementary notes B1 to B13, the image as one of classes or subclasses.

[Additional remark C]

The whole or part of the example embodiments disclosed above can be described as, but not limited to, the following supplementary notes.

(Supplementary note C1)

A training program for causing a computer to function as a training apparatus, the training program causing the computer to function as:

a selecting means for selecting, based on a label assigned to an image of interest included in a plurality of images and a label assigned to each of the plurality of images, each of the plurality of images as a positive sample, a hard negative sample, or an easy negative sample;
a reselecting means for reselecting, based on at least one of similarities which are a similarity between features of the image of interest and features of the hard negative sample and a similarity between the features of the image of interest and features of the easy negative sample, each of the plurality of images having been selected by the selecting means, as the positive sample, the hard negative sample, or the easy negative sample; and
a training means for using the plurality of images each having been reselected by the reselecting means to train a machine learning model to (i) increase a similarity between the features of the image of interest and features of the positive sample, (ii) decrease the similarity between the features of the image of interest and the features of the hard negative sample and the similarity between the features of the image of interest and the features of the easy negative sample, and (iii) make the similarity between the features of the image of interest and the features of the hard negative sample greater than the similarity between the features of the image of interest and the features of the easy negative sample.

(Supplementary note C2)

The training program described in supplementary note C1, in which:

the plurality of images each belong to one of a plurality of classes and each belong to one of a plurality of subclasses obtained by further dividing each of the plurality of classes into classifications;
the label indicates a class and a subclass to which the plurality of images each belong;
the selecting means is configured to:

select, as the positive sample, an image which belongs to a subclass to which the image of interest belongs;
select, as the hard negative sample, an image which belongs to a subclass different from the subclass to which the image of interest belongs, and belongs to a class to which the image of interest belongs; and
select, as the easy negative sample, an image which belongs to a class different from the class to which the image of interest belongs.

(Supplementary note C3)

The training program described in supplementary note C1 or C2, in which
based on at least one of distances in a predetermined feature space which are a distance between the image of interest and the hard negative sample and a distance between the image of interest and the easy negative sample, the reselecting means is configured to reselect each of the plurality of images.

(Supplementary note C4)

The training program described in supplementary note C3, in which
based on a threshold determined by at least one selected from the group consisting of a confidence interval of the distance between the image of interest and the hard negative sample, a maximum value of the distance between the image of interest and the hard negative sample, a confidence interval of the distance between the image of interest and the easy negative sample, and a minimum value of the distance between the image of interest and the easy negative sample, the reselecting means is configured to reselect each of the plurality of images.

(Supplementary note C5)

The training program described in supplementary note C3, in which
among images each having been selected as the hard negative sample by the selecting means, the reselecting means is configured to select, as the easy negative sample, an image which is at a distance from the image of interest, the distance being greater than a threshold.

(Supplementary note C6)

The training program described in supplementary note C3, in which
among images each having been selected as the hard negative sample by the selecting means, the reselecting means is configured to select, as the easy negative sample, an image which is at a distance from the image of interest, the distance being smaller than a threshold.

(Supplementary note C7)

The training program described in supplementary note C3, in which
among images each having been selected as the hard negative sample by the selecting means, the reselecting means is configured to select, as a sample which is not used for training the machine learning model, an image which is at a distance from the image of interest, the distance being greater than a threshold.

(Supplementary note C8)

The training program described in supplementary note C3, in which
among images each having been selected as the easy negative sample by the selecting means, the reselecting means is configured to select, as a sample which is not used for training the machine learning model, an image which is at a distance from the image of interest, the distance being smaller than a threshold.

(Supplementary note C9)

The training program described in any one of supplementary notes C1 to C8, in which

features referred to in the training means are in feature vector form, and
a similarity between a feature vector of the image of interest and a feature vector of the positive sample is based on an inner product of the feature vector of the image of interest and the feature vector of the positive sample, a similarity between the feature vector of the image of interest and a feature vector of the hard negative sample is based on an inner product of the feature vector of the image of interest and the feature vector of the hard negative sample, and a similarity between the feature vector of the image of interest and a feature vector of the easy negative sample is based on an inner product of the feature vector of the image of interest and the feature vector of the easy negative sample.

(Supplementary note C10)

The training program described in supplementary note C2, in which:

the plurality of images each further belong to one of a plurality of middle classes which are obtained by dividing each of the plurality of classes into a plurality of classifications and which each have one or more of the subclasses grouped together;
the selecting means is configured to:

take, as a first hard negative sample, an image which is the hard negative sample and which belongs to a middle class the same as a middle class to which the image of interest belongs, and
take, as a second hard negative sample, an image which is the hard negative sample and which belongs to a middle class different from the middle class to which the image of interest belongs;

the reselecting means is configured to
reselect, based on at least one of similarities which are a similarity between the features of the image of interest and features of the first hard negative sample, a similarity between the features of the image of interest and features of the second hard negative sample, and the similarity between the features of the image of interest and the features of the easy negative sample, each of the plurality of images having been selected by the selecting means, as the positive sample, the first hard negative sample, the second hard negative sample, or the easy negative sample; and
the training means is configured to
train the machine learning model to make the similarity between the features of the image of interest and the features of the first hard negative sample greater than the similarity between the features of the image of interest and the features of the second hard negative sample.

(Supplementary note C11)

The training program described in supplementary note C2 or C10, in which

a subject contained in each of the plurality of images is a cell specimen, and
the plurality of images are classified into the plurality of classes according to whether cell specimens contained in the plurality of images are benign or malignant, and classified into the plurality of subclasses according to types of cell specimens contained in the plurality of images.

(Supplementary note C12)

The training program described in any one of supplementary notes C1 to C11, in which
the selecting means is configured to take, as the positive sample, a data augmentation image obtained by subjecting the image of interest to data augmentation.

(Supplementary note C13)

The training program described in supplementary note C2, in which:

the machine learning model includes

a first group of layers which receives an image as an input and generates features of the image, and
a second group of layers connected to the first group of layers, the second group of layers receiving the features of the image as an input and classifying the image, which is the input, as one of the plurality of classes or one of the plurality of subclasses; and

the training means is configured to use the plurality of images and training labels corresponding to results of classification of the plurality of images into the plurality of classes or the plurality of subclasses, to train the machine learning model.

(Supplementary note C14)

A classifying program for causing the computer to function as
a classifying means for, upon input of an image containing a subject to the machine learning model having been trained by the training program described in any one of supplementary notes C1 to C13, classifying the image as one of classes or subclasses.

[Additional remark D]

The whole or part of the example embodiments disclosed above can be described as, but not limited to, the following supplementary notes.

(Supplementary note D1)

A training apparatus, including
at least one processor, the at least one processor carrying out:

a selecting process of selecting, based on a label assigned to an image of interest included in a plurality of images and a label assigned to each of the plurality of images, each of the plurality of images as a positive sample, a hard negative sample, or an easy negative sample;
a reselecting process of reselecting, based on at least one of similarities which are a similarity between features of the image of interest and features of the hard negative sample and a similarity between the features of the image of interest and features of the easy negative sample, each of the plurality of images having been selected by the selecting process, as the positive sample, the hard negative sample, or the easy negative sample; and
a training process of using the plurality of images each having been reselected by the reselecting process to train a machine learning model to (i) increase a similarity between the features of the image of interest and features of the positive sample, (ii) decrease the similarity between the features of the image of interest and the features of the hard negative sample and the similarity between the features of the image of interest and the features of the easy negative sample, and (iii) make the similarity between the features of the image of interest and the features of the hard negative sample greater than the similarity between the features of the image of interest and the features of the easy negative sample.

The training apparatus may further include a memory. The memory may have stored therein a program for causing the at least one processor to carry out each of the processes.

(Supplementary note D2)

The training apparatus described in supplementary note D1, in which:

the plurality of images each belong to one of a plurality of classes and each belong to one of a plurality of subclasses obtained by further dividing each of the plurality of classes into classifications;
the label indicates a class and a subclass to which the plurality of images each belong;
in the selecting process, the at least one processor

selects, as the positive sample, an image which belongs to a subclass to which the image of interest belongs;
selects, as the hard negative sample, an image which belongs to a subclass different from the subclass to which the image of interest belongs, and belongs to a class to which the image of interest belongs; and
selects, as the easy negative sample, an image which belongs to a class different from the class to which the image of interest belongs.

(Supplementary note D3)

The training apparatus described in supplementary note D1 or D2, in which
in the reselecting process, based on at least one of distances in a predetermined feature space which are a distance between the image of interest and the hard negative sample and a distance between the image of interest and the easy negative sample, the at least one processor reselects each of the plurality of images.

(Supplementary note D4)

The training apparatus described in supplementary note D3, in which
in the reselecting process, based on a threshold determined by at least one selected from the group consisting of a confidence interval of the distance between the image of interest and the hard negative sample, a maximum value of the distance between the image of interest and the hard negative sample, a confidence interval of the distance between the image of interest and the easy negative sample, and a minimum value of the distance between the image of interest and the easy negative sample, the at least one processor reselects each of the plurality of images.

(Supplementary note D5)

The training apparatus described in supplementary note D3, in which
in the reselecting process, among images each having been selected as the hard negative sample by the selecting process, the at least one processor selects, as the easy negative sample, an image which is at a distance from the image of interest, the distance being greater than a threshold.

(Supplementary note D6)

The training apparatus described in supplementary note D3, in which
in the reselecting process, among images each having been selected as the easy negative sample by the selecting process, the at least one processor selects, as the hard negative sample, an image which is at a distance from the image of interest, the distance being smaller than a threshold.

(Supplementary note D7)

The training apparatus described in supplementary note D3, in which
in the reselecting process, among images each having been selected as the hard negative sample by the selecting process, the at least one processor selects, as a sample which is not used for training the machine learning model, an image which is at a distance from the image of interest, the distance being greater than a threshold.

(Supplementary note D8)

The training apparatus described in supplementary note D3, in which
in the reselecting process, among images each having been selected as the easy negative sample by the selecting process, the at least one processor selects, as a sample which is not used for training the machine learning model, an image which is at a distance from the image of interest, the distance being smaller than a threshold.

(Supplementary note D9)

The training apparatus described in any one of supplementary notes D1 to D8, in which

features referred to in the training process are in feature vector form, and
a similarity between a feature vector of the image of interest and a feature vector of the positive sample is based on an inner product of the feature vector of the image of interest and the feature vector of the positive sample, a similarity between the feature vector of the image of interest and a feature vector of the hard negative sample is based on an inner product of the feature vector of the image of interest and the feature vector of the hard negative sample, and a similarity between the feature vector of the image of interest and a feature vector of the easy negative sample is based on an inner product of the feature vector of the image of interest and the feature vector of the easy negative sample.

(Supplementary note D10)

The training apparatus described in supplementary note D2, in which:

the plurality of images each further belong to one of a plurality of middle classes which are obtained by dividing each of the plurality of classes into a plurality of classifications and which each have one or more of the subclasses grouped together;
in the selecting process, the at least one processor

takes, as a first hard negative sample, an image which is the hard negative sample and which belongs to a middle class the same as a middle class to which the image of interest belongs, and

takes, as a second hard negative sample, an image which is the hard negative sample and which belongs to a middle class different from the middle class to which the image of interest belongs;

in the reselecting process, the at least one processor

reselects, based on at least one of similarities which are a similarity between the features of the image of interest and features of the first hard negative sample, a similarity between the features of the image of interest and features of the second hard negative sample, and the similarity between the features of the image of interest and the features of the easy negative sample, each of the plurality of images having been selected by the selecting process, as the positive sample, the first hard negative sample, the second hard negative sample, or the easy negative sample; and

in the training process, the at least one processor

trains the machine learning model to make the similarity between the features of the image of interest and the features of the first hard negative sample greater than the similarity between the features of the image of interest and the features of the second hard negative sample.

(Supplementary note D11)

The training apparatus described in supplementary note D2or D10, in which

a subject contained in each of the plurality of images is a cell specimen, and

the plurality of images are classified into the plurality of classes according to whether cell specimens contained in the plurality of images are benign or malignant, and classified into the plurality of subclasses according to types of cell specimens contained in the plurality of images.

(Supplementary note D12)

The training apparatus described in any one of supplementary notes D1 to D 11, in which

in the selecting process, the at least one processor takes, as the positive sample, a data augmentation image obtained by subjecting the image of interest to data augmentation.

(Supplementary note D13)

The training apparatus described in supplementary note D2, in which:

the machine learning model includes

a first group of layers which receives an image as an input and generates features of the image, and

a second group of layers connected to the first group of layers, the second group of layers receiving the features of the image as an input and classifying the image, which is the input, as one of the plurality of classes or one of the plurality of subclasses; and

in the training process, the at least one processor uses the plurality of images and training labels corresponding to results of classification of the plurality of images into the plurality of classes or the plurality of subclasses, to train the machine learning model.

(Supplementary note D14)

A classifying apparatus in which

the at least one processor carries out

a classifying process of upon input of an image containing a subject to the machine learning model having been trained by the training apparatus described in supplementary notes D 1 to D13, classifying the image as one of classes or subclasses.

[Additional remark E]

The whole or part of the example embodiments disclosed above can be described as, but not limited to, the following supplementary notes.

(Supplementary note E1)

A non-transitory recording medium having recorded thereon a training program for causing a computer to function as a training apparatus, the training program causing the computer to carry out:

a selecting process of selecting, based on a label assigned to an image of interest included in a plurality of images and a label assigned to each of the plurality of images, each of the plurality of images as a positive sample, a hard negative sample, or an easy negative sample;
a reselecting process of reselecting, based on at least one of similarities which are a similarity between features of the image of interest and features of the hard negative sample and a similarity between the features of the image of interest and features of the easy negative sample, each of the plurality of images having been selected by the selecting process, as the positive sample, the hard negative sample, or the easy negative sample; and
a training process of using the plurality of images each having been reselected by the reselecting process to train a machine learning model to (i) increase a similarity between the features of the image of interest and features of the positive sample, (ii) decrease the similarity between the features of the image of interest and the features of the hard negative sample and the similarity between the features of the image of interest and the features of the easy negative sample, and (iii) make the similarity between the features of the image of interest and the features of the hard negative sample greater than the similarity between the features of the image of interest and the features of the easy negative sample.

Reference Signs List

1: Training apparatus
11: Selecting section
12, 113A: Reselecting section
13, 114A: Training section
1A: Information processing apparatus
112A: Sample selecting section
121A: Classifying section
LM1: Machine learning model

**Claims**

1. A training apparatus, comprising:

a selecting means for selecting, based on a label assigned to an image of interest included in a plurality of images and a label assigned to each of the plurality of images, each of the plurality of images as a positive sample, a hard negative sample, or an easy negative sample;
a reselecting means for reselecting, based on at least one of similarities which are a similarity between features of the image of interest and features of the hard negative sample and a similarity between the features of the image of interest and features of the easy negative sample, each of the plurality of images having been selected by the selecting means, as the positive sample, the hard negative sample, or the easy negative sample; and
a training means for using the plurality of images each having been reselected by the reselecting means to train a machine learning model to (i) increase a similarity between the features of the image of interest and features of the positive sample, (ii) decrease the similarity between the features of the image of interest and the features of the hard negative sample and the similarity between the features of the image of interest and the features of the easy negative sample, and (iii) make the similarity between the features of the image of interest and the features of the hard negative sample greater than the similarity between the features of the image of interest and the features of the easy negative sample.

2. The training apparatus according to claim 1, wherein:

the plurality of images each belong to one of a plurality of classes and each belong to one of a plurality of subclasses obtained by further dividing each of the plurality of classes into classifications;
the label indicates a class and a subclass to which the plurality of images each belong;
the selecting means is configured to:

select, as the positive sample, an image which belongs to a subclass to which the image of interest belongs;
select, as the hard negative sample, an image which belongs to a subclass different from the subclass to which the image of interest belongs, and belongs to a class to which the image of interest belongs; and
select, as the easy negative sample, an image which belongs to a class different from the class to which the image of interest belongs.

3. The training apparatus according to claim 1 or 2, wherein
based on at least one of distances in a predetermined feature space which are a distance between the image of interest and the hard negative sample and a distance between the image of interest and the easy negative sample, the reselecting means is configured to reselect each of the plurality of images.

4. The training apparatus according to claim 3, wherein
based on a threshold determined by at least one selected from the group consisting of a confidence interval of the distance between the image of interest and the hard negative sample, a maximum value of the distance between the image of interest and the hard negative sample, a confidence interval of the distance between the image of interest and the easy negative sample, and a minimum value of the distance between the image of interest and the easy negative sample, the reselecting means is configured to reselect each of the plurality of images.

5. The training apparatus according to claim 3, wherein
among images each having been selected as the hard negative sample by the selecting means, the reselecting means is configured to select, as the easy negative sample, an image which is at a distance from the image of interest, the distance being greater than a threshold.

6. The training apparatus according to claim 3, wherein
among images each having been selected as the easy negative sample by the selecting process, the reselecting means is configured to select, as the hard negative sample, an image which is at a distance from the image of interest, the distance being smaller than a threshold.

7. The training apparatus according to claim 3, wherein
among images each having been selected as the hard negative sample by the selecting means, the reselecting means is configured to select, as a sample which is not used for training the machine learning model, an image which is at a distance from the image of interest, the distance being greater than a threshold.

8. The training apparatus according to claim 3, wherein
among images each having been selected as the easy negative sample by the selecting means, the reselecting means is configured to select, as a sample which is not used for training the machine learning model, an image which is at a distance from the image of interest, the distance being smaller than a threshold.

9. The training apparatus according to any one of claims 1 to 8, wherein

features referred to in the training means are in feature vector form, and
a similarity between a feature vector of the image of interest and a feature vector of the positive sample is based on an inner product of the feature vector of the image of interest and the feature vector of the positive sample, a similarity between the feature vector of the image of interest and a feature vector of the hard negative sample is based on an inner product of the feature vector of the image of interest and the feature vector of the hard negative sample, and a similarity between the feature vector of the image of interest and a feature vector of the easy negative sample is based on an inner product of the feature vector of the image of interest and the feature vector of the easy negative sample.

10. The training apparatus according to claim 2, wherein:

the plurality of images each further belong to one of a plurality of middle classes which are obtained by dividing each of the plurality of classes into a plurality of classifications and which each have one or more of the subclasses grouped together;

the selecting means is configured to

take, as a first hard negative sample, an image which is the hard negative sample and which belongs to a middle class the same as a middle class to which the image of interest belongs, and
take, as a second hard negative sample, an image which is the hard negative sample and which belongs to a middle class different from the middle class to which the image of interest belongs;

the reselecting means is configured to
reselect, based on at least one of similarities which are a similarity between the features of the image of interest and features of the first hard negative sample, a similarity between the features of the image of interest and features of the second hard negative sample, and the similarity between the features of the image of interest and the features of the easy negative sample, each of the plurality of images having been selected by the selecting means, as the positive sample, the first hard negative sample, the second hard negative sample, or the easy negative sample; and
the training means is configured to
train the machine learning model to make the similarity between the features of the image of interest and the features of the first hard negative sample greater than the similarity between the features of the image of interest and the features of the second hard negative sample.

11. The training apparatus according to claim 2 or 10, wherein

a subject contained in each of the plurality of images is a cell specimen, and
the plurality of images are classified into the plurality of classes according to whether cell specimens contained in the plurality of images are benign or malignant, and classified into the plurality of subclasses according to types of cell specimens contained in the plurality of images.

12. The training apparatus according to any one of claims 1 to 11, wherein
the selecting means is configured to take, as the positive sample, a data augmentation image obtained by subjecting the image of interest to data augmentation.

13. The training apparatus according to claim 2, wherein:

the machine learning model includes

a first group of layers which receives an image as an input and generates features of the image, and
a second group of layers connected to the first group of layers, the second group of layers receiving the features of the image as an input and classifying the image, which is the input, as one of the plurality of classes or one of the plurality of subclasses; and

the training means is configured to use the plurality of images and training labels corresponding to results of classification of the plurality of images into the plurality of classes or the plurality of subclasses, to train the machine learning model.

14. A training method, comprising:

at least one processor selecting, based on a label assigned to an image of interest included in a plurality of images and a label assigned to each of the plurality of images, each of the plurality of images as a positive sample, a hard negative sample, or an easy negative sample;
the at least one processor reselecting, based on at least one of similarities which are a similarity between features of the image of interest and features of the hard negative sample and a similarity between the features of the image of interest and features of the easy negative sample, each of the plurality of images having been selected by the selecting, as the positive sample, the hard negative sample, or the easy negative sample; and
the at least one processor using the plurality of images each having been reselected by the reselecting to train a machine learning model to (i) increase a similarity between the features of the image of interest and features of the positive sample, (ii) decrease the similarity between the features of the image of interest and the features of the hard negative sample and the similarity between the features of the image of interest and the features of the easy negative sample, and (iii) make the similarity between the features of the image of interest and the features of the hard negative sample greater than the similarity between the features of the image of interest and the features of the easy negative sample.

15. A program for causing a computer to function as a training apparatus, the program causing the computer to function as:

a selecting means for selecting, based on a label assigned to an image of interest included in a plurality of images and a label assigned to each of the plurality of images, each of the plurality of images as a positive sample, a hard negative sample, or an easy negative sample;

a reselecting means for reselecting, based on at least one of similarities which are a similarity between features of the image of interest and features of the hard negative sample and a similarity between the features of the image of interest and features of the easy negative sample, each of the plurality of images having been selected by the selecting means, as the positive sample, the hard negative sample, or the easy negative sample; and

a training means for using the plurality of images each having been reselected by the reselecting means to train a machine learning model to (i) increase a similarity between the features of the image of interest and features of the positive sample, (ii) decrease the similarity between the features of the image of interest and the features of the hard negative sample and the similarity between the features of the image of interest and the features of the easy negative sample, and (iii) make the similarity between the features of the image of interest and the features of the hard negative sample greater than the similarity between the features of the image of interest and the features of the easy negative sample.

FIG. 1

1

Training apparatus

11

Selecting
section

12

Reselecting
section

13

Training
section

FIG. 2

START

S1

S11

Selecting process

S12

Reselecting process

S13

Training process

END

## FIG. 3

1A

Information processing apparatus

10A

Control section

110A

Training phase executing section

111A

Acquiring section

112A

Sample selecting section

113A

Reselecting section

114A

Training section

120A

Inference phase executing section

121A

Classifying section

20A

Storage section

IS

Image set

LM1

Machine learning model

40A

Input section

50A

Output section

30A

Communicating section

FIG. 4

| Coarse classification | Fine classification |
|---|---|
| Benign cell | EC<br>Normal epithelial cell |
| | IEC<br>Inflammatory EC |
| | M<br>Macrophage |
| | LC<br>Lymphocyte |
| | WBC<br>White blood cell |
| Malignant cell | S<br>Small cell cancer |
| | Ad<br>Adenocarcinoma |
| | Sq<br>Squamous cell carcinoma |
| | NS<br>Any other non-small cell cancer |

## FIG. 5

| Coarse classification | Intermediate classification | Fine classification |
|---|---|---|
| Benign cell | Normal cell | EC<br>Normal epithelial cell |
| | Normal cell with findings | IEC<br>Inflammatory EC |
| | | M<br>Macrophage |
| | Any other normal cell | LC<br>Lymphocyte |
| | | WBC<br>White blood cell |
| Malignant cell | Small cell cancer | S<br>Small cell cancer |
| | Non-small cell cancer | Ad<br>Adenocarcinoma |
| | | Sq<br>Squamous cell carcinoma |
| | | NS<br>Any other non-small cell cancer |

## FIG. 6

# FIG. 7

Before reselection

After reselection

● Anchor
⊘ Positive sample
⊙ Hard negative
○ Easy negative

# FIG. 8

## FIG. 9

Training: early stage

D11

After training

D12

● Anchor
⊘ Positive sample
⊛ Hard negative
○ Easy negative

**EUROPEAN SEARCH REPORT**

Application Number

EP 25 15 6063

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 111 291 887 A (BEIJING MEGVII TECH CO LTD) 16 June 2020 (2020-06-16) * page 5 - page 14; claims 3,6; figure 6 * ----- | 1-15 | INV. G06N3/0455 G06V10/74 G06V10/774 G06N3/09 ADD. G06N3/0895 |

TECHNICAL FIELDS
SEARCHED      (IPC)

G06N
G06V

The present search report has been drawn up for all claims

| Place of search | Date of completion of the search | Examiner |
|---|---|---|
| The Hague | 2 July 2025 | Falco, Gabriele |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 15 6063

This annex lists the patent family members relating to the patent documents cited in the above-mentioned European search report.
The members are as contained in the European Patent Office EDP file on
The European Patent Office is in no way liable for these particulars which are merely given for the purpose of information.

02-07-2025

| Patent document cited in search report | Publication date | Patent family member(s) | Publication date |
|---|---|---|---|
| CN 111291887 A | 16-06-2020 | NONE | |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2024 A
- JP 051993 A

- JP 2022178892 A